# EUROPEAN PATENT APPLICATION

(11) **EP 3 139 646 A1**
(43) Date of publication of application: **08.03.2017**
(21) Application number: 15306356.5
(22) Date of filing: 03.09.2015
(51) Int. Cl.: H04W 8/26, H04W 80/02, H04L 29/12

(54) **METHODS, APPARATUSES AND COMPUTER PROGRAMS FOR PROVIDING A USER PLANE ADDRESS**

(71) Applicant: ALCATEL LUCENT, 92100 Boulogne-Billancourt (FR)
(72) Inventor: Zeller, Dietrich K., 70435 Stuttgart (DE); Bakker, Hajo, 70435 Stuttgart (DE); Aziz, Danish, 70435 Stuttgart (DE); Doll, Mark, 70435 Stuttgart (DE)
(74) Representative: 2SPL Patentanwälte PartG mbB

(57) **Abstract**

Embodiments provide methods, apparatuses and computer programs for providing a user plane address, more specifically, but not exclusively based on a transformation of a control plane address. The method for providing a user plane address for at least one mobile transceiver (200) in a mobile communication system (300) further comprising at least one mobile communication system infrastructure entity (100) configured to communicate with the at least one mobile transceiver (200) via a user plane communication channel (320), the mobile transceiver (200) being controlled via a control plane communication channel (310). The method comprises obtaining (12) a control plane address for the at least one mobile transceiver (200). The method further comprises determining (14) a user plane address for the at least one mobile transceiver (200) based on a distinct transformation of the control plane address. The method further comprises providing (16) the user plane address.

## Description

### Technical Field

Embodiments relate to methods, apparatuses and computer programs for providing a user plane address, more specifically, but not exclusively based on a transformation of a control plane address.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the throughput of communication systems are steadily increasing. As connected devices, such as smartphones, computers, or streaming devices increase the amount of data transmitted due to a more widespread use and due to demand for more high quality services, a new category of devices is using an increasing share of the available bandwidth.

The Internet of Things (IoT), which predominantly relies on Machine-to-Machine (M2M) communication, connects formerly unconnected devices, such as thermostats, household appliances, bio monitors etc. to communication systems, e.g. mobile communication systems.

Machine-to-Machine communication, especially Massive Machine-to-Machine communication (MMC) may increase the number of devices participating in communication systems. As such appliances partaking in MMC may be located in remote areas or may be mobile, MMC may also use mobile communication systems, e.g. General Packet Radio Service (GPRS), Universal Mobile Telecommunications System (UMTS), Long Term Evolution (LTE) or 5^{th}-generation mobile communication systems (5G). As, in many cases, no high quality content might be exchanged in MMC, but sparse data, such as instructions, sensory readings etc., data packets sent in MMC may comprise a small size, compared with data packets sent or received by smart phones or streaming clients, which may result in a high overhead for establishing connections or bearers for transferring the data.

Mobile communication systems, e.g. LTE or 5G, may comprise a control plane, which is used to handle radio-specific administrative functionality, e.g. Radio Resource Control (RRC, the assignment of radio resources for transmission), or the paging of mobile transceivers (to determine their location/associated base station transceiver in the mobile communication system) and a user plane to handle the transfer of user data, e.g. Internet Protocol-packages or calls.

Various embodiments relate to methods, apparatuses and computer programs for determining a user plane address. In at least some embodiments, to reduce an overhead of such small transmissions, embodiments may use a connection-less paradigm, e.g. embodiments might not establish a connection (bearer) between a mobile transceiver and e.g. the packet gateway, but may use packet-based routing within the mobile communication system. In mobile communication systems, a user plane and a control plane may be separated - the user plane may be used to transmit data, calls etc., to and from mobile transceivers of the mobile communication system, and the control plane may be used to coordinate and manage the mobile transceivers, e.g. their association with base station transceivers of the mobile communication system. The packet based routing may be based on user plane addresses (instead of the connections) to identify the mobile transceivers. Both planes may use different means of identification to distinguish the mobile transceivers, e.g. the International Mobile Subscriber Identity (IMSI) and the Temporary Mobile Subscriber Identity (TMSI) on the control plane, or, in conventional systems, dedicated connections or bearers for the user plane. Embodiments may support a connectionless paradigm for both user plane and control plane, e.g. embodiments may communicate via the control plane and via the user plane without establishing dedicated, mobile transceiver-specific connections first, e.g. based on a packet-switch paradigm. In conventional systems, to find out a control plane address from a user plane communication, the mobility management entity is involved to determine the control plane address, based on the dedicated connection or bearer of the user plane communication, causing a high communication overhead and load at the mobility management entity. This may for example be necessary when a packet or call arrives for a mobile transceiver, which is not actively connected to any base station transceiver, and must be located among the base station transceivers using paging, which requires the control plane address.

Embodiments provide a transformation between the user plane communication, which is based on a user plane address, and the control plane address. The transformation may be calculated locally, e.g. based on a reversible transformation instruction, without involving a database or separate entity, thus reducing an overhead in the core network of the mobile communication system. This may enable a local and latency-reduced determination of the control plane or user plane address, which may then be used to bridge the gap between the user plane and the control plane, e.g. for paging.

Embodiments provide a method for providing a user plane address for at least one mobile transceiver in a mobile communication system. The mobile communication system comprises at least one mobile communication system infrastructure entity configured to communicate with the at least one mobile transceiver via a user plane communication channel. The mobile transceiver is controlled via a control plane communication channel. The method comprises obtaining a control plane address for the at least one mobile transceiver. The method further comprises determining a user plane address for the at least one mobile transceiver based on a distinct transformation of the control plane address. The method further comprises providing the user plane address. Determining the user plane address based on a distinct transformation may enable user plane - control plane bridging without a requirement to lookup corresponding addresses in a database or control instance. This may decrease an overhead and delays, may enable user plane - control plane interaction at any point of the mobile communication system, and may enable a connectionless routing in a mobile communication system.

In at least some embodiments, the determining may be based on a reversible transformation of the control plane address. In various embodiments, the determining may be based on a bijective transformation of the control plane address. In at least some embodiments, the determining may be based on a local transformation of the control plane address. A reversible and/or bijective transformation may enable a transformation from control plane to user plane and vice versa, i.e., a control plane address or user plane address may be determined at any entity within the mobile communication system, and may be performed locally. This may further enable control plane - user plane bridging, e.g. if based on a static transformation rule. A local transformation may reduce a delay of the transformation and may enable a transformation without an involvement of additional entities, e.g. a Mobility Management Entity (MME) of the mobile communication system.

In various embodiments, the obtaining may further comprise determining the control plane address when the at least one mobile transceiver is associated with the at least one mobile communication system infrastructure entity. Determining the control plane address when the at least one mobile transceiver is associated with the at least one mobile communication system infrastructure entity may enable a distinct temporary control plane addressing of the at least one mobile transceiver, which may enable a distinct user plane addressing of the at least one mobile transceiver.

In various embodiments, the control plane address may correspond to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI. Using standardized formats for the control plane address may enable a wide adaptation of embodiments.

In at least some embodiments, the transformation may comprise using an affix and at least part of the control plane address. Using at least part of the control plane address may enable a low-complexity transformation between the user plane and the control plane. Using an affix may enable a transformation between address spaces having different address spaces or address space dimensions, and may enable an inclusion of additional information, which might e.g. be used for routing.

In at least some embodiments, the affix may comprise a fixed bit sequence. Alternatively or additionally, the affix may be related to the at least one mobile communication system infrastructure entity. A fixed bit sequence may facilitate a transformation and may enable an extension of a length of the user plane or control plane address. The affix being related to the at least one mobile communication system infrastructure entity may enable including further information, e.g. routing information, in the control plane or user plane address. An affix may e.g. correspond to a prefix and/or a suffix.

In at least some embodiments, the at least one mobile communication system entity may correspond to at least one element of the group of base station transceiver, serving gateway, packet gateway, mobility management entity and radio access network user plane anchor. Enabling control plane and user plane communication with a variety of entities may further reduce an overhead and/or delays in the mobile communication system.

Embodiments further provide a method for determining a control plane address of at least one mobile transceiver at a mobile communication system infrastructure entity of a mobile communication system. The mobile communication system infrastructure entity is configured to communicate with the at least one mobile transceiver via a user plane communication channel. The mobile transceiver is controlled via a control plane communication channel. The method comprises obtaining a user plane address of the at least one mobile transceiver. The method further comprises determining a control plane address of the at least one mobile transceiver based on a distinct transformation of the user plane address. Determining the control plane address based on the user plane address may enable an execution of control actions at various points of the mobile communication system, e.g. a triggering of paging from an infrastructure node or gateway, e.g. without an involvement of the MME.

In at least some embodiments, the user plane address may be comprised in a service request. The method may further comprise paging the at least one mobile transceiver based on the control plane address. The method may further comprise obtaining a destination for the service request. The method may further comprise providing the service request to the at least one mobile transceiver. Determining the control plane address based on the user plane address and triggering paging from an arbitrary infrastructure node or gateway, e.g. without an involvement of the MME, may decrease an overhead of the mobile communication system and/or may reduce delays.

In various embodiments, the determining may be based on a reversible, bijective and/or a local transformation. The user plane address might be based on a reversible transformation of the control plane address. A reversible and/or bijective transformation may enable a transformation from control plane to user plane and vice versa, and may further enable control plane - user plane bridging, e.g. if based on a static transformation rule. A local transformation may reduce a delay of the transformation and may enable a transformation without an involvement of additional entities, e.g. a Mobility Management Entity (MME) of the mobile communication system, which is presently, e.g. used in LTE. The user plane address being based on the reversible transformation of the control plane address may enable the re-transformation of the user plane address.

In at least some embodiments, the transformation may comprise using an affix and at least part of the control plane address. Comprising at least part of the control plane address may enable a low-complexity transformation between the user plane and the control plane. Comprising an affix may enable a transformation between address spaces having different address spaces, and may enable an inclusion of additional information, which might e.g. be used for routing.

Embodiments further provide an apparatus for determining a user plane address for at least one mobile transceiver in a mobile communication system. The mobile communication system further comprises at least one mobile communication system infrastructure entity configured to communicate with the at least one mobile transceiver via a user plane communication channel. The mobile transceiver is controlled via a control plane communication channel. The apparatus comprises an input interface configured to obtain a control plane address for the at least one mobile transceiver. The apparatus further comprises a control module configured to determine a user plane address for the at least one mobile transceiver based on a distinct transformation of the control plane address. The apparatus further comprises an output interface configured to provide the user plane address.

Embodiments further provide an apparatus for determining a control plane address of at least one mobile transceiver at a mobile communication system infrastructure entity of a mobile communication system. The mobile communication system infrastructure entity is configured to communicate with the at least one mobile transceiver via a user plane communication channel. The mobile transceiver is controlled via a control plane communication channel. The apparatus comprises an input interface configured to obtain a user plane address of the at least one mobile transceiver. The apparatus further comprises a control module configured to determine a control plane address of the at least one mobile transceiver based on a transformation of the user plane address.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a flow chart of an embodiment of a method for providing a user plane address;
- Fig. 1a: illustrates another flow chart of an embodiment of a method for providing a user plane address further comprising determining a control plane address;
- Fig. 2: shows an exemplary embodiment of control plane - user plane bridging;
- Fig. 3: shows an messaging sequence of an exemplary embodiment of user plane paging;
- Fig. 4: illustrates a flow chart of an embodiment of a method for determining a control plane address of at least one mobile transceiver;
- Fig. 4a: illustrates a flow chart of another embodiment of a method for determining a control plane address of at least one mobile transceiver and further paging the at least one mobile transceiver;
- Fig. 5: shows an exemplary embodiment of a mobile communication system;
- Fig. 6: illustrates a block diagram of an embodiment of an apparatus 40 for determining a user plane address; and
- Fig. 7: illustrates a block diagram of an embodiment of an apparatus 50 for determining a control plane address.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Many mobile communication systems separate functionality into the control plane (signaling) and user plane (user communication services). Both planes work in conventional systems in a connection oriented way, so the connections frequently have to be setup, modified and released.

This may result in high signaling loads especially for applications exhibiting sporadic transactional behavior. Such behavior is typical for most M2M (Machine to Machine) and IoT (Internet of Things) applications, which may dominate in the future. For 5^{th}-generation (5G) mobile communication systems, a major target may be to have the possibility to provide services in a connectionless way, e.g. to support large scale applications in the Internet of Things economically. In the user plane, 5G may introduce methods to replace/supplement the path switched networking by a packet switched networking allowing for connectionless services.

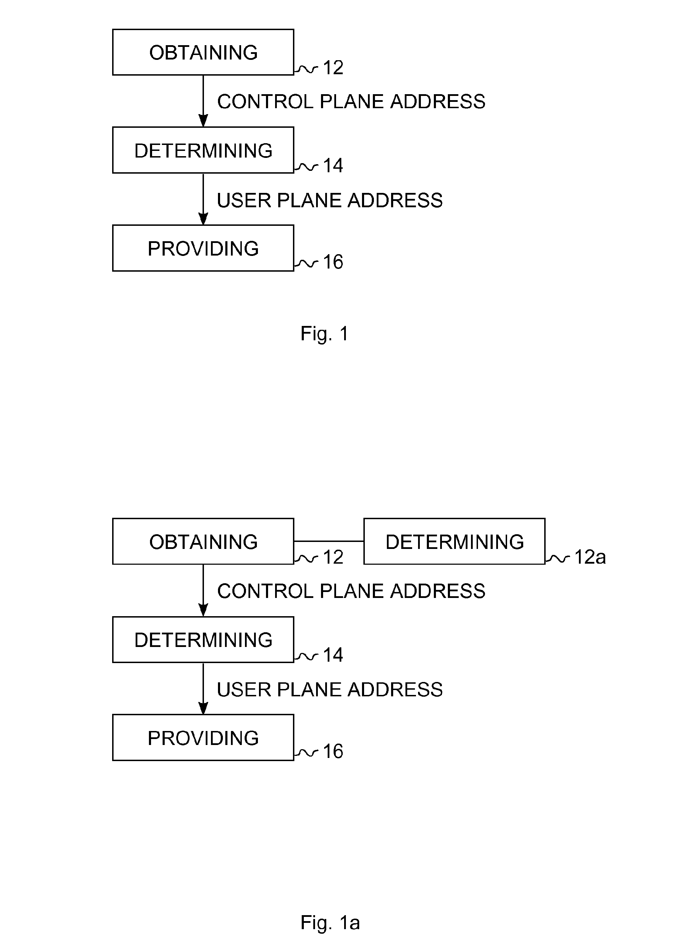

Al least some embodiments relate to a common addressing scheme for control and user plane bridging for configuration free and flexible user plane and control plane interaction in a mobile communication system, e.g. a 5G mobile communication system. Embodiments may provide provisioning of terminal user plane addresses required for packet switching with a reduced effort while simultaneously respecting privacy requirements as offered in current systems through the use of temporary identifiers. Conventional systems may use fixed allocation of Ethernet addresses by the vendor to devices in a user plane. However this method may violate privacy requirements for mobile services where permanent addresses would allow to easily track users. In the control plane, terminals (e.g. at least one mobile transceiver 200 as introduced in the description of Fig. 1) are conventionally addressed by their related temporary identifiers GUTI (Global Unique Temporary Identifier) respective its shortened version the S-TMSI (the permanent identifier IMSI is often used in exceptional cases on the terminal network interfaces). A basic idea of embodiments may be to reuse such control plane address in the user plane.

Embodiments may further enable interworking between the user plane and the control plane, and might not require user specific connections between user plane and control plane network nodes. Embodiments might e.g. re-use pre-existing connections between a Serving Gateway (S-GW) and a Mobility Management Entity (MME) of the mobile communication system.

Conventional systems providing user plane - control plane interaction need to establish terminal specific connections between a user plane node and a control plane node. Examples for this are the UE-associated logical S1-connection between enhanced Node B (eNB) and MME for association of the message to the User Equipment (UE) in eNB and Evolved Packet Core (EPC) as described in the S1-APP specification found in 3^{rd} Generation Partnership Project (3GPP) Technical Specification (TS) 36.413 and the user specific General Packet Radio Service Tunneling Protocol GTP-c tunnels maintained between MME and S-GW. A UE may correspond to a mobile transceiver, e.g. the at least one mobile transceiver 200 as introduced in the description of Fig. 1, of the mobile communication system.

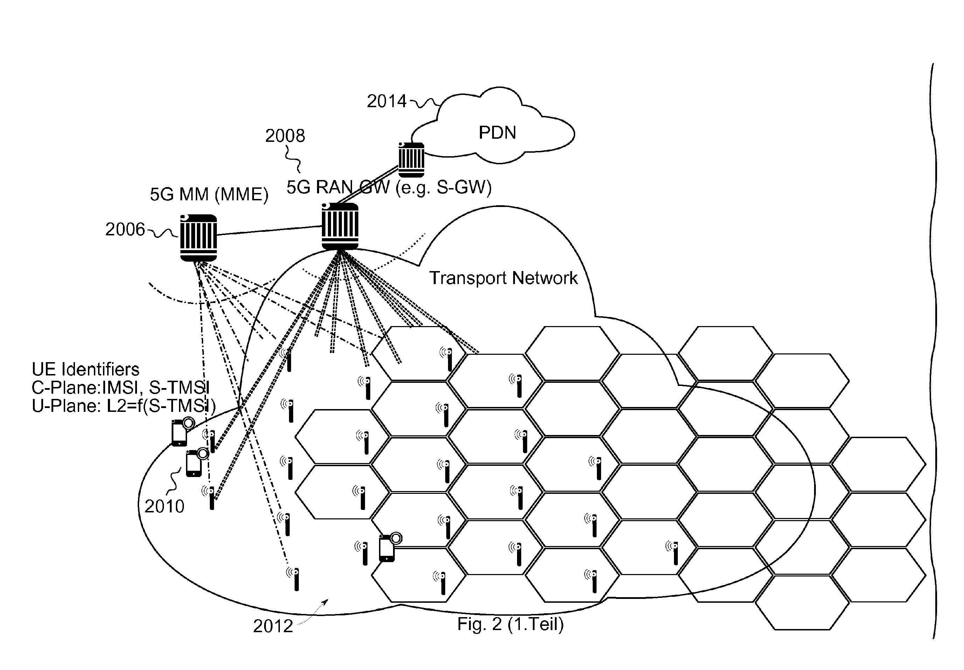

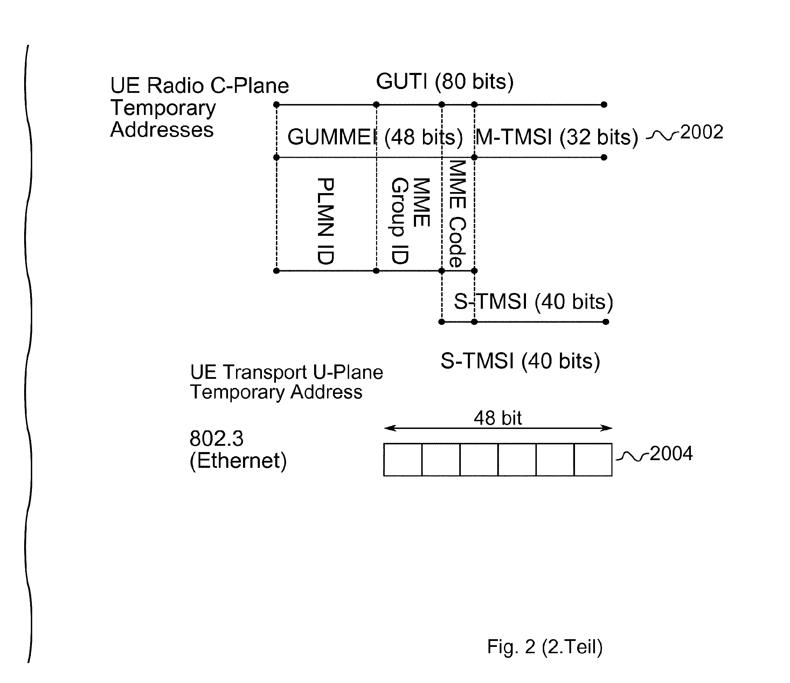

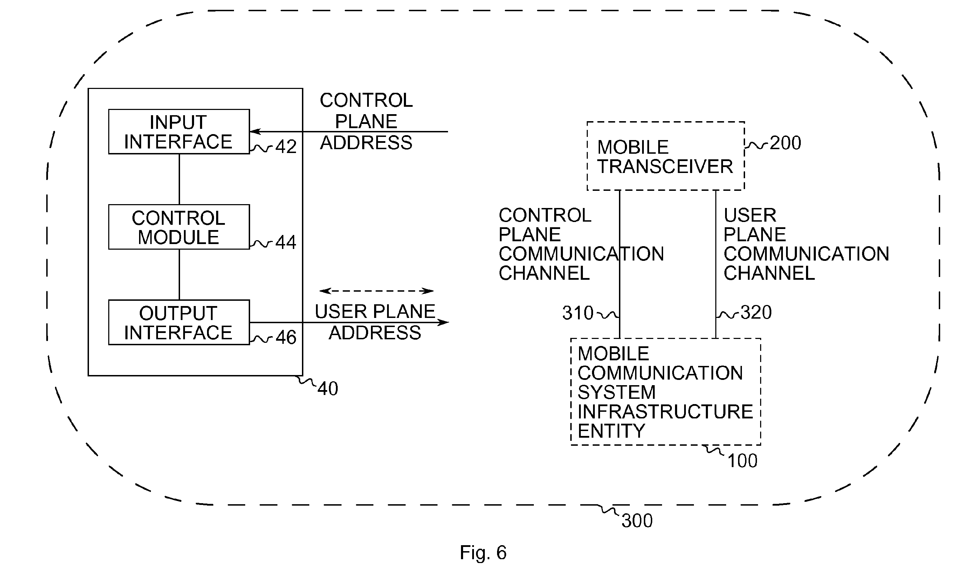

The basic idea of at least some embodiments is to have a common addressing scheme such that the control plane addresses and the user plane addresses of a terminal may be mapped one-to-one by a general not UE dependent function. (i.e. every node knowing either the control or user plane address might obtain the other address by a simple algorithmic function). Fig. 2 shows an exemplary embodiment: Of the control plane (or C-Plane) temporary addresses 2002 GUTI (80bits), which comprises the 48bit Globally Unique Mobile Management Entity Identifier (GUMMEI), which comprises the MME Code, the MME Group ID and the Public Land Mobile Network (PLMN) ID, and the 32bit MME TMSI (M-TMSI), and S-TMSI, which comprises the M-TMSI and the MME Code, the S-TMSI is used as control plane address. In an exemplary embodiment it is mapped to a 48bit Ethernet (IEEE 802.3) address 2004, which may e.g. comprise the 40bit S-TMSI or a transformation thereof and pre-defined additional bits, e.g. indicating the address as being unicast and locally administrated, as specified in the Ethernet standard. These addresses may then be used by 5G Mobility Management entities 2006 and 5G Radio Access Network GateWays (RAN GW) 2008 to address the mobile transceivers 2010, which may correspond to the at least one mobile transceiver 200 as will be introduced in the description of Fig. 1, associated with a plurality of 5G cells 2012. The 5G MM 2006 and/or the 5G RAN GW 2008 may correspond to at least one mobile communication system infrastructure entity 100 as will be introduced in Fig.6. The 5G RAN GW serves as a gateway to the Packet Data Network (PDN) 2014 of the mobile communication system, which may correspond to a mobile communication system 300 as introduced subsequently.

As stated above, a connection oriented principle for user and control plane interaction may come with severe penalties. First and foremost the considerable configuration effort for connections may demand to limit the interaction points between user plane and control plane to just two nodes (eNB - MME and S-GW - MME) and may require a considerable signaling overhead to release such connections and reestablish such connections due to terminal mobility or inactivity. Embodiments may avoid signaling overhead by introducing a connectionless terminal specific interaction between user and control plane and may enable an introduction of additional nodes in the architecture (e.g. movement tracking local anchors) such that no signaling connections might have to be maintained.

This basic idea might enable an easy configuration of a mobile transceiver with a user plane address, e.g. by re-using a control plane address, such as the S-TMSI (System Architecture Evolution Temporary Mobile Subscriber Identity). Embodiments may further enable a facilitated interworking by means of a transformable identifier, which might be used so both planes can communicate without requiring further steps to resolve the address. User plane nodes might reuse the paging concept of the control plane once they have determined the control plane paging address of a terminal.

In practical terms this might mean the following. The network protocol for a connectionless user plane might be similar to an Ethernet network protocol, or might be based on Ethernet (IEEE 802.3). As one-to-one mapping function might be used, as shown in Fig 2. In an exemplary embodiment, the 40 bit control plane UE identifier S-TMSI might be mapped to an Ethernet address, where the first 8 bits might correspond to a commonly known fixed value. In the reverse direction the S-TMSI of a terminal might regained by stripping of just the first 8 bits of the terminals Ethernet address, as seen in Fig. 2.

Fig. 1 illustrates a flow chart of an embodiment of a method for providing a user plane address for at least one mobile transceiver 200 in a mobile communication system 300. The mobile communication system 300 further comprises at least one mobile communication system infrastructure entity 100 configured to communicate with the at least one mobile transceiver 200 via a user plane communication channel 320. The mobile transceiver 200 is controlled via the control plane channel 310. In at least some embodiments, an infrastructure entity of the at least one mobile communication system infrastructure entity 100 maybe configured to control the, or exchange control information with the, mobile transceiver 200 via the control plane communication channel.

The at least one mobile communication system entity 100 may e.g. correspond to at least one element of the group of base station transceiver, serving gateway, packet gateway, mobility management entity and radio access network user plane anchor. The control plane communication channel 310 and/or the user plane communication channel 320 may correspond to a connectionless communication channel, e.g. a packet-switched communication channel. The at least one mobile transceiver 200 and an infrastructure entity of the at least one the at least one mobile communication system infrastructure entity 100 may for example communicate via the control plane communication channel 310 using control plane addresses, e.g. control plane destination addresses and/or control plane source addresses, or via the user plane communication channel 310 using user plane addresses, e.g. user plane destination addresses and/or user plane source addresses. In at least some embodiments, an infrastructure entity of the at least one the at least one mobile communication system infrastructure entity 100 may for example communicate with the mobile transceiver 200 using the user plane communication channel, and affect a controlling of the mobile transceiver 200 via another infrastructure entity of the at least one the at least one mobile communication system infrastructure entity 100 communicating with the mobile transceiver 200 via the control plane communication channel. In various embodiments, the at least one mobile transceiver 200 and the at least one the at least one mobile communication system infrastructure entity 100 may e.g. communicate using connection-less communication, e.g. no dedicated connection setup might be required.

The method comprises obtaining 12 a control plane address for the at least one mobile transceiver 200. In at least some embodiments, the obtaining 12 may correspond to receiving the control plane address, e.g. from the at least one mobile communication system infrastructure entity 100, and/or comprised in a data packet or service request. In various embodiments, as shown in Fig. 1a, the obtaining 12 may further comprise determining 12a the control plane address when the at least one at least one mobile transceiver 200 is associated with the at least one mobile communication system infrastructure entity 100. For example, the control plane address might be determined by an entity or module configured to control the mobility management, e.g. a Mobility Management Entity (MME), when the at least one mobile transceiver 200 joins the mobile communication system, e.g. associates for a first time with a base station transceiver of the mobile communication system. The control plane address may e.g. correspond to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI, which may be assigned to the at least one mobile transceiver 200 when it associates with the network.

The method further comprises determining 14 a user plane address for the at least one mobile transceiver 200 based on a distinct transformation of the control plane address. The distinct transformation may be based on a pre-defined transformation function, e.g. a mathematical function, a string concatenation function, or a bit-wise transformation function (e.g. an XOR function). In a preferred embodiment, the transformation may use the control plane address as sole variable input parameter. In various embodiments, the determining may be based on a local transformation of the control plane address, e.g. the user plane address is determined without involving a further data source or mobile communication system infrastructure entity.

In at least some embodiments, the determining 14 may be based on a reversible transformation of the control plane address, e.g. the determining 14 may be based on a bijective transformation of the control plane address. The determining 14 may be based on an assignment rule used to distinctly assign an address from a control plane address space to an address of a user plane address space. In various embodiments, the user plane address space and the control plane address space may correspond. In a preferred embodiment, the transformation may correspond to the identity, e.g. the user space address may correspond to the control space address (they may share the same binary or string representation), either in the same address space, or in separate address spaces, which may support identical addresses for at least a part of the respective address spaces.

In at least some embodiments, the transformation may comprise using an affix and at least part of the control plane address. The affix may correspond to a suffix or a prefix. It may comprise a fixed bit sequence, and/or might be based on the at least one mobile communication system infrastructure entity 100. The affix may relate to the at least one mobile communication system infrastructure entity 100, it may for example be based on an identifier of the at least one mobile communication system infrastructure entity 100, or a group identifier, e.g. the MME Group ID. The affix may e.g. comprise information related to a type of address (unicast, multicast), whether it is local or global etc. It may further comprise a fixed value e.g. 111111. In at least some embodiments, the transformation may concatenate the affix to the at least part of the control plane address to determine (14) the user plane address.

The affix may be based on the same rule or fixed value for every module executing the method, e.g. the fixed value or function may be specified in a standard document, or operators of the mobile communication system 300 may be responsible to configure this rule consistently in all the respective nodes.

In an alternative embodiment the affix might be used to create a bigger address space, e.g. by extending the selection of respective bits. The affix might be based on the MME GroupID, for example. The one-to-one (bijective) mapping between user and control plane addresses of a terminal might be linked to a certain (service or pool) area, e.g. a MME group. This restriction might be removed if the address length is chosen to be high enough to cover all mobile transceivers, e.g. the control plane address may correspond to the GUTI or the IMSI, which are globally unique (GUTI between 76 and 80 bits; IMSI 15 digits in standard encoding 60 bit). This is larger then what is used in e.g. Ethernet (48bit) or IEEE 802.14.5 (64bit).

If addresses with 64 bit address length are used, at least some embodiments may define a globally unique one-to-one mapping between control plane IMSI 60bit and user plane 64 bit address (e.g. by setting the most significant 4 bits of the user plane address to a fixed value).

The method further comprises providing 16 the user plane address. In at least some embodiments, the providing 16 may comprise transmitting the user plane address to another entity of the mobile communication system 300, or providing the user plane address for a transmission of user data to the at least one mobile transceiver 200.

In at least some embodiments, the user plane address may be used to address the at least one mobile transceiver 200 for communication via the user plane communication channel. The control plane address may be used to address the at least one mobile transceiver 200 for communication via the control plane communication channel.

In at least some embodiments, the control plane of the mobile communication system 300 may handle radio-specific administrative functionality, e.g. Radio Resource Control (RRC, the assignment of radio resources for transmission), or the paging of mobile transceivers (to determine their location/associated base station transceiver in the mobile communication system). In at least some embodiments, the control plane may correspond to a Long Term Evolution (Advanced) (LTE/LTE-A) and/or 5G control plane. The control plane communication channel 310 may be used to transmit control plane-specific communication. The control plane communication on the control plane communication channel 310 may be based on a control plane protocol, e.g. RRC, Non-Access Stratum (NAS) protocol, S1 Application Protocol (S1-AP), or the ConnectionLess Tunnel Protocol (CLTP).

In at least some embodiments, the user plane of the mobile communication system 300 may handle the transfer of user data, e.g. Internet Protocol-Packages or calls. The user plane may e.g. correspond to a LTE/LTE-A or 5G user plane. The user plane communication channel 320 may be used to transfer the user data. The user plane communication on the user plane communication channel may e.g. be based on a user plane protocol which allows to exchange packets of a network layer protocol e.g. the Internet Protocol or of an application specific protocol, based on a new connectionless layer 2 of future generations of mobile networks making use of the user plane addresses introduced in embodiments. As name for this new layer 2 concept we use CLTP..

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, which may correspond to the at least one mobile communication system infrastructure entity 100, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver, e.g. the at least one mobile transceiver 200, can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver.

In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

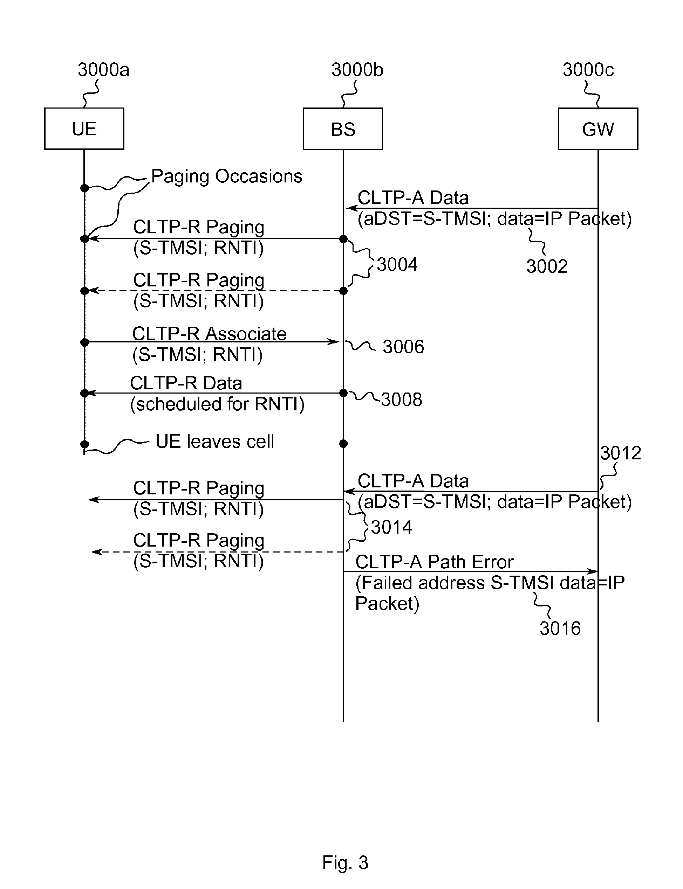

At least some embodiments may further provide user plane paging, e.g. paging based on the control plane address derived from the user plane address, which might be performed without involvement of control plane nodes (e.g. of the MME). In conventional mobile communication system, the control plane paging procedure might not be directly usable in the user plane, as the addressing concepts may differ. Embodiments may provide a transformation between user plane and control plane addresses, which may enable such user plane paging. Fig. 3 illustrates an exemplary embodiment of user plane paging between a User Equipment (UE) 3000a, which may correspond to the at least one mobile transceiver 200, a base station transceiver (BS) 3000b, and a gateway (GW) 3000c, which both may correspond to the at least one mobile communication system infrastructure entity 100.

In the exemplary embodiment, the GW 3000c transmits a CLTP data transmission 3002, which comprises a user plane address, and an IP data packet to the BS 3000b. The BS 3000b calculates (e.g. stripping off the first 8 bytes) the related control plane address S-TMSI and might use this S-TMSI for paging. The BS 3000b transmits one or optionally multiple CLTP paging transmissions 3004, using the S-TMSI and the Radio Network Temporary Identifier (RNTI). The BS 3000b might optionally transmit a multiple paging transmissions 3004, to support Discontinuous Reception (DRX) and the related advantages in energy savings. The UE 3000a returns a CLTP associate transmission 3006 to the BS 3000b, using the S-TMSI and RNTI, and the BS 3000b transmits the data transmission 3002 as CLTP data transmission 3008 as a scheduled transmission based on the RNTI. If the US 3000a has left the cell, CLTP paging transmissions 3014 based on a CLTP data transmission 3012 do not return a CLTP associate transmission, and the BS 3000b returns a CLTP path error transmission 3016 comprising the failed S-TMSI address and the IP package. Embodiments may enable paging without involvement of the MME as required in 4G. Embodiments may thus support User Plane Paging or Connectionless Bearer Paging.

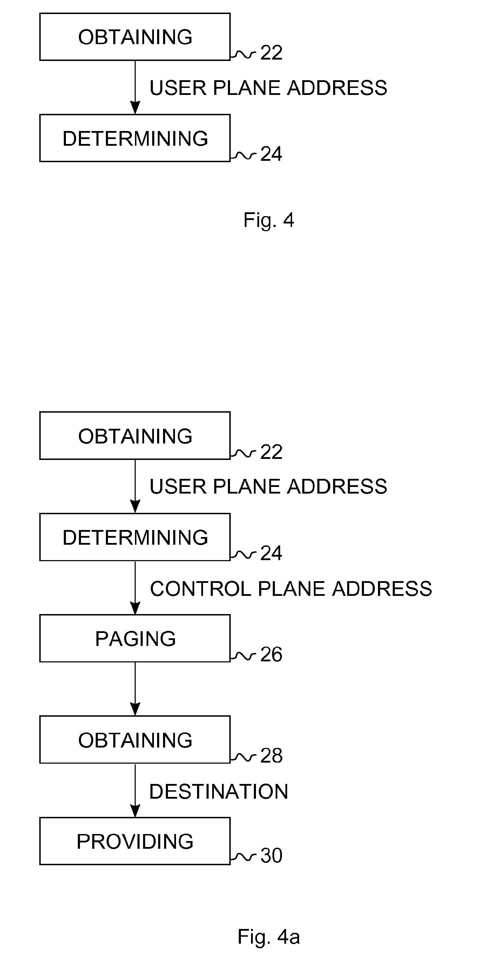

Fig. 4 illustrates a flow chart of an embodiment of a method for determining a control plane address of at least one mobile transceiver 200 at a mobile communication system infrastructure entity 100 of a mobile communication system 300. The mobile communication system infrastructure entity 100 is configured to communicate with the at least one mobile transceiver 200 via a user plane communication channel 320. The mobile transceiver 200 is controlled via a control plane communication channel 310. In at least some embodiments, an infrastructure entity of the at least one mobile communication system infrastructure entity 100 may be configured to control the, or exchange control information with the, mobile transceiver 200 via the control plane communication channel.

The method comprises obtaining 22 a user plane address of the at least one mobile transceiver 200. The obtaining 22 may e.g. correspond to receiving a transmission, a service request or data packet comprising the user plane address.

The method further comprises determining 24 a control plane address of the at least one mobile transceiver 200 based on a distinct transformation of the user plane address. The determining 24 may be analogous to the determining 14 as described above, e.g. based on a reverse of the transformation of determining 14.

In at least some embodiments, as shown in Fig. 4a, the user plane address may be comprised in a service request. The service request 24 may e.g. correspond to at least one element of the group of a data packet, a call, a Short Message Service (SMS), a control plane configuration update and a notification.

The method may further comprise paging 26 the at least one mobile transceiver 200 based on the control plane address. The paging 26 may correspond to notifying the at least one mobile transceiver 200 with a request to actively associate with a base station transceiver, which may correspond to the at least one mobile communication system infrastructure entity 100. The paging 26 may comprise transmitting a paging message on a paging control channel. If a mobile transceiver, e.g. the mobile transceiver 200 detects its control plane address on the paging control channel, which may correspond to the control plane communication channel, it (re-)associates with a base station transceiver to receive user data, e.g. the service request, for which the paging 26 has been performed. In at least some embodiments, the paging 26 may correspond to sending a paging message from a base station transceiver and/or to spreading a paging request among a plurality of base station transceivers, e.g. based on the last known location of the at least one mobile transceiver 200.

The method may further comprise obtaining 28 a destination for the service request. In various embodiments, the destination may be based on the (re-)association of the at least one mobile transceiver 200 with a base station transceiver 200, e.g. based on a CLTP association transmission 3006. The obtaining 28 may correspond to obtaining the CLTP association transmission, or may correspond to obtaining a notification from a base station transceiver indicating a presence or association of the at least one mobile transceiver 200. In at least some embodiments, if the at least one mobile transceiver 200 has left the cells queried during paging, a path error may result instead of the destination.

The method may further comprise providing 30 the service request to the at least one mobile transceiver 200. The providing 30 may e.g. correspond to transmitting the service request to the at least one mobile transceiver 200.

In various embodiments, the determining 24 may be based on a reversible, bijective and/or a local transformation. The user plane address may be based on a reversible transformation of the control plane address. In at least some embodiments, the transformation comprises using an affix and at least part of the control plane address. In at least some embodiments, the transformation may strip the affix from the at least part of the control plane address to determine 24 the control plane address. The control plane address may correspond to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI. The affix may comprise a fixed bit sequence. The affix may relate to the at least one mobile communication system infrastructure entity.

More details and aspects of the method (e.g. control plane address, user plane address, at least one mobile transceiver, mobile communication system infrastructure entity 100, mobile communication system 300, control plane communication channel 310, user plane communication channel 320, transformation, distinct transformation, local transformation, affix) are mentioned in connection with the proposed concept or one or more examples described above (e.g. Fig. 1 to 3). The method may comprise one or more additional optional features corresponding to one or more aspects of the proposed concept or one or more examples described above or below.

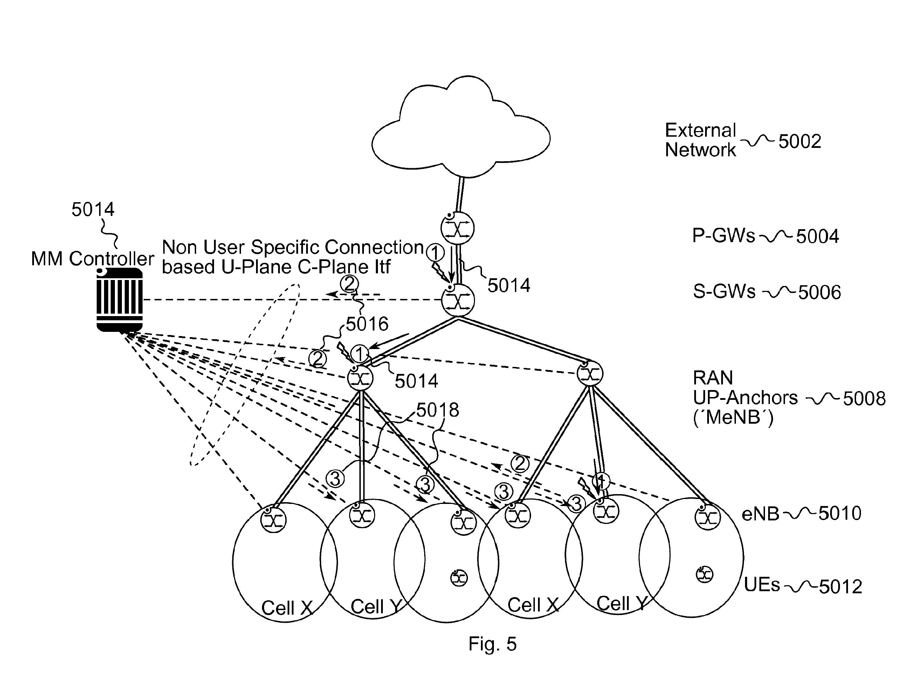

In another exemplary embodiment, additional user plane nodes between node B and gateway may be used, as depicted in Figure 5. Embodiments may enable user plane - control plane bridging, so all nodes might be able to trigger a paging. This is in contrast to 4G, where only nodes (S-GW) having a persistent UE-Specific connection with the Control Plane (MME) trigger a paging. Fig. 5 shows the at least one mobile communication system infrastructure entity 100 comprising Packet GateWays (P-GWs) 5004, which are connected to an external network 5002, S-GWs 5006, RAN UP-Anchors 5008, eNBs 5010 and a Mobility Management controller 5014. The eNBs 5010 provide cells for UEs 5012, which may correspond to the at least one mobile transceiver 200. In the exemplary embodiment, without user specific configuration, all user plane nodes (5004, 5006, 5008, 5010, 5012) can interact with control plane nodes (5014, 5006) referring to the UEs 5012 by control plane address determined based on the transformation of the user plane address. At (1) 5014, a packet arrives for a UE without valid forwarding entry. The at least one mobile communication system infrastructure entity 100 determines the control plane address based on a user plane address comprised in the packet. At (2) 5016, the at least one mobile communication system infrastructure entity 100 requests the paging based on the control plane address (e.g. the UEs 5012 S-TMSI). This then leads to a control plane paging request (3) 5018 to the eNBs 5010 having cells within the UEs 5012 registration area.

Fig. 6 illustrates a block diagram of an embodiment of an apparatus 40 for determining a user plane address for at least one mobile transceiver 200 in a mobile communication system 300. The mobile communication system 300 further comprises at least one mobile communication system infrastructure entity 100 configured to communicate with the at least one mobile transceiver 200 via a user plane communication channel 320. The mobile transceiver 200 is controlled via a control plane communication channel 310.

The apparatus 40 comprises an input interface 42 configured to obtain a control plane address for the at least one mobile transceiver 200. An input, e.g. the input interface 42, may correspond to an interface for receiving information, which may be in digital (bit) values according to a specified code, within a module, between modules or between modules of different entities.

The apparatus 40 further comprises a control module 44 configured to determine a user plane address for the at least one mobile transceiver 200 based on a distinct transformation of the control plane address. In embodiments the control module 44 may be implemented using one or more processing units, one or more processing devices, any means for processing, such as a processor, a computer or a programmable hardware component being operable with accordingly adapted software. In other words, the described function of the control module 44 may as well be implemented in software, which is then executed on one or more programmable hardware components. Such hardware components may comprise a general purpose processor, a Digital Signal Processor (DSP), a micro-controller, etc.

The apparatus further comprises an output interface 46 configured to provide the user plane address. An output, e.g. the output interface 46, may correspond to an interface for transmitting information, which may be represented by digital (bit) values according to a specified code or protocol, within a module, between modules, or between modules of different entities.

More details and aspects of the apparatus 40 (e.g. control plane address, user plane address, at least one mobile transceiver, mobile communication system infrastructure entity 100, mobile communication system 300, control plane communication channel 310, user plane communication channel 320, transformation, distinct transformation, local transformation, affix) are mentioned in connection with the proposed concept or one or more examples described above (e.g. Fig. 1 to 5). The apparatus 40 may comprise one or more additional optional features corresponding to one or more aspects of the proposed concept or one or more examples described above or below.

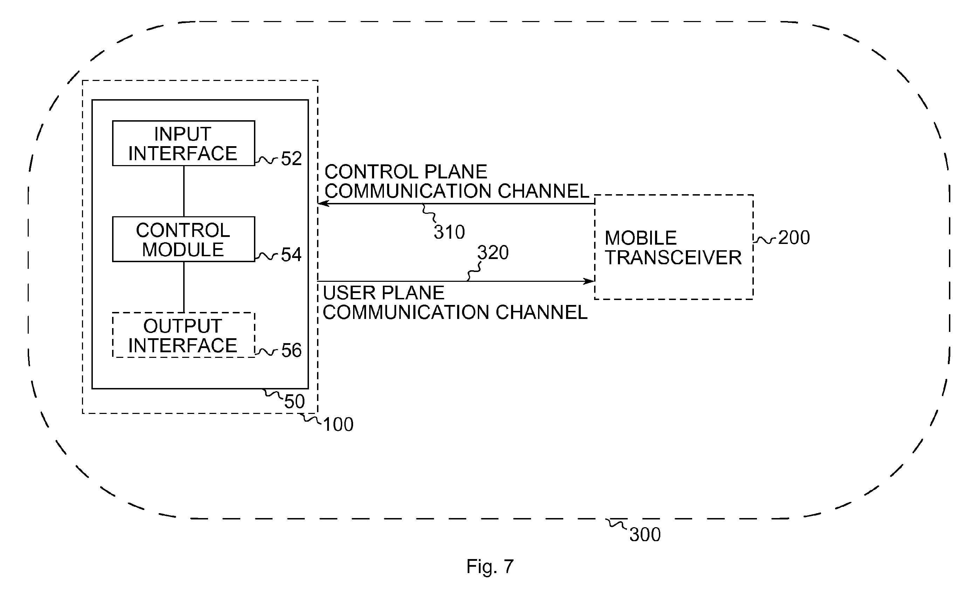

Fig. 7 illustrates a block diagram of an embodiment of an apparatus 50 for determining a control plane address of at least one mobile transceiver 200 at a mobile communication system infrastructure entity 100 of a mobile communication system 300. The mobile communication system infrastructure entity 100 is configured to communicate with the at least one mobile transceiver 200 via a user plane communication channel 320. The mobile transceiver 200 is controlled via a control plane communication channel 310.

The apparatus 50 comprises an input interface 52 configured to obtain a user plane address of the at least one mobile transceiver 200. An input, e.g. the input interface 52, may correspond to an interface for receiving information, which may be in digital (bit) values according to a specified code, within a module, between modules or between modules of different entities. In various embodiments, the input interface 52 may correspond to or comprise a radio access network interface for communication with the at least one mobile transceiver 200.

The apparatus 50 further comprises a control module 54 configured to determine a control plane address of the at least one mobile transceiver 200 based on a distinct transformation of the user plane address. In embodiments the control module 54 may be implemented using one or more processing units, one or more processing devices, any means for processing, such as a processor, a computer or a programmable hardware component being operable with accordingly adapted software. In other words, the described function of the control module 54 may as well be implemented in software, which is then executed on one or more programmable hardware components. Such hardware components may comprise a general purpose processor, a Digital Signal Processor (DSP), a micro-controller, etc.

In at least some embodiments, the apparatus 50 may further comprise an optional output interface 56, as indicated by the dotted lines. An output, e.g. the output interface 56, may correspond to an interface for transmitting information, which may be represented by digital (bit) values according to a specified code or protocol, within a module, between modules, or between modules of different entities. The user plane address may be comprised in a service request. In various embodiments, the output interface 56 may correspond to or comprise a radio access network interface for communication with the at least one mobile transceiver 200.

The control module 54 may be further configured to page the at least one mobile transceiver 200 based on the control plane address, via the output interface 56, and to obtaining 28 a destination for the service request, e.g. via the input interface 52. The control module 54 may be further configured to provide the service request to the at least one mobile transceiver 200, via the output interface 58.

More details and aspects of the apparatus 50 (e.g. control plane address, user plane address, at least one mobile transceiver, mobile communication system infrastructure entity 100, mobile communication system 300, control plane communication channel 310, user plane communication channel 320, transformation, distinct transformation, local transformation, affix) are mentioned in connection with the proposed concept or one or more examples described above (e.g. Fig. 1 to 6). The apparatus 50 may comprise one or more additional optional features corresponding to one or more aspects of the proposed concept or one or more examples described above or below.

Embodiments further provide the mobile communication system 300 comprising the at least one mobile communication system infrastructure entity 100 and the at least one mobile transceiver 200 communicating using the user plane communication channel 320, the mobile transceiver 200 being controlled using the control plane communication channel 310, and further comprising the apparatus 40 and/or the apparatus 50 as described above. Embodiments further provide a mobile transceiver 200 comprising the apparatus 40 and/or the apparatus 50 as described above. Embodiments further provide the at least one mobile communication system infrastructure entity 100 comprising the apparatus 40 and/or the apparatus 50 as described above.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. Method for providing a user plane address for at least one mobile transceiver (200) in a mobile communication system (300) further comprising at least one mobile communication system infrastructure entity (100) configured to communicate with the at least one mobile transceiver (200) via a user plane communication channel (320), the mobile transceiver (200) being controlled via a control plane communication channel (310), the method comprising:
obtaining (12) a control plane address for the at least one mobile transceiver (200),
determining (14) a user plane address for the at least one mobile transceiver (200) based on a distinct transformation of the control plane address, and
providing (16) the user plane address.

2. The method of claim 1, wherein the determining (14) is based on a reversible transformation of the control plane address,
and/or wherein the determining (14) is based on a bijective transformation of the control plane address,
and/or wherein the determining (14) is based on a local transformation of the control plane address.

3. The method of claim 1, wherein the obtaining (12) further comprises determining (12a) the control plane address when the at least one mobile transceiver (200) is associated with the at least one mobile communication system infrastructure entity (100).

4. The method of claim 1, wherein the transformation comprises using an affix and at least part of the control plane address.

5. The method of claim 1,
wherein the control plane address corresponds to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI.

6. The method of claim 4, wherein the affix comprises a fixed bit sequence,
and/or wherein the affix relates to the at least one mobile communication system infrastructure entity (100).

7. The method of claim 1, wherein the at least one mobile communication system entity (100) corresponds to at least one element of the group of base station transceiver, serving gateway, packet gateway, mobility management entity and radio access network user plane anchor.

8. Method for determining a control plane address of at least one mobile transceiver (200) at a mobile communication system infrastructure entity (100) of a mobile communication system (300),
wherein the mobile communication system infrastructure entity (100) is configured to communicate with the at least one mobile transceiver (200) via a user plane communication channel (320), wherein the mobile transceiver (200) is controlled via a control plane communication channel (310), the method comprising obtaining (22) a user plane address of the at least one mobile transceiver (200), and determining (24) a control plane address of the at least one mobile transceiver (200) based on a distinct transformation of the user plane address.

9. The method of claim 8, wherein the user plane address is comprised in a service request, the method further comprising:
paging (26) the at least one mobile transceiver (200) based on the control plane address,
obtaining (28) a destination for the service request, and
providing (30) the service request to the at least one mobile transceiver (200).

10. The method of claim 8,
wherein the determining (24) is based on a reversible, bijective and/or a local transformation,
and/or wherein the user plane address is based on a reversible transformation of the control plane address.

11. The method of claim 8, wherein the transformation comprises using an affix and at least part of the control plane address.

12. The method of claim 11,
wherein the control plane address corresponds to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI. and/or wherein the affix comprises a fixed bit sequence,
and/or wherein the affix relates to the at least one mobile communication system infrastructure entity (100).

13. Apparatus (40) for determining a user plane address for at least one mobile transceiver (200) in a mobile communication system (300) further comprising at least one mobile communication system infrastructure entity (100) configured to communicate with the at least one mobile transceiver (200) via a user plane communication channel (320), the mobile transceiver (200) being controlled via a control plane communication channel (310), the apparatus (40) comprising:
an input interface (42) configured to obtain a control plane address for the at least one mobile transceiver (200);
a control module (44) configured to determine a user plane address for the at least one mobile transceiver (200) based on a distinct transformation of the control plane address; and
an output interface (46) configured to provide the user plane address.

14. Apparatus (50) for determining a control plane address of at least one mobile transceiver (200) at a mobile communication system infrastructure entity (100) of a mobile communication system (300),
wherein the mobile communication system infrastructure entity (100) is configured to communicate with the at least one mobile transceiver (200) via a user plane communication channel (320), wherein the mobile transceiver (200) is controlled via a control plane communication channel (310), the apparatus (50) comprising an input interface (52) configured to obtain a user plane address of the at least one mobile transceiver (200); and
a control module (54) configured to determine a control plane address of the at least one mobile transceiver (200) based on a distinct transformation of the user plane address.

15. A computer program product comprising a computer readable medium having computer readable program code embodied therein, the computer readable program code being configured to implement any of the methods of claim 13 and 14, when being loaded on a computer, a processor, or a programmable hardware component.

## Amended claims

### Amended claims in accordance with Rule 137(2) EPC.

1. Method for providing a user plane address for at least one mobile transceiver (200) in a mobile communication system (300) further comprising at least one mobile communication system infrastructure entity (100) configured to communicate with the at least one mobile transceiver (200) via a user plane communication channel (320), the at least one mobile transceiver (200) being controlled via a control plane communication channel (310), the method comprising:
obtaining (12) a control plane address for the at least one mobile transceiver (200),
determining (14) a user plane address for the at least one mobile transceiver (200) based on a distinct transformation of the control plane address, and
providing (16) the user plane address.

2. The method of claim 1, wherein the determining (14) is based on a reversible transformation of the control plane address,
or wherein the determining (14) is based on a bijective transformation of the control plane address,
or wherein the determining (14) is based on a local transformation of the control plane address.

3. The method of claim 1, wherein the obtaining (12) further comprises determining (12a) the control plane address when the at least one mobile transceiver (200) is associated with the at least one mobile communication system infrastructure entity (100).

4. The method of claim 1, wherein the transformation comprises using an affix and at least part of the control plane address.

5. The method of claim 1,
wherein the control plane address corresponds to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI.

6. The method of claim 4, wherein the affix comprises a fixed bit sequence,
or wherein the affix relates to the at least one mobile communication system infrastructure entity (100).

7. The method of claim 1, wherein the at least one mobile communication system entity (100) corresponds to at least one element of the group of base station transceiver, serving gateway, packet gateway, mobility management entity and radio access network user plane anchor.

8. Method for determining a control plane address of at least one mobile transceiver (200) at a mobile communication system infrastructure entity (100) of a mobile communication system (300),
wherein the mobile communication system infrastructure entity (100) is configured to communicate with the at least one mobile transceiver (200) via a user plane communication channel (320), wherein the at least one mobile transceiver (200) is controlled via a control plane communication channel (310), the method comprising obtaining (22) a user plane address of the at least one mobile transceiver (200); and determining (24) the control plane address of the at least one mobile transceiver (200) based on a distinct transformation of the user plane address.

9. The method of claim 8, wherein the user plane address is comprised in a service request, the method further comprising:
paging (26) the at least one mobile transceiver (200) based on the control plane address,
obtaining (28) a destination for the service request, and
providing (30) the service request to the at least one mobile transceiver (200).

10. The method of claim 8,
wherein the determining (24) is based on a reversible, bijective and/or a local transformation,
or wherein the user plane address is based on a reversible transformation of the control plane address.

11. The method of claim 8, wherein the transformation comprises using an affix and at least part of the user plane address.

12. The method of claim 11,
wherein the control plane address corresponds to at least one element of the group of a Temporary Mobile Subscriber Identity, TMSI, a System Architecture Evolution Temporary Mobile Subscriber Identity, S-TMSI, International Mobile Subscriber Identity, IMSI, and Globally Unique Temporary user equipment Identity, GUTI.
or wherein the affix comprises a fixed bit sequence,
or wherein the affix relates to the at least one mobile communication system infrastructure entity (100).

13. Apparatus (40) for determining a user plane address for at least one mobile transceiver (200) in a mobile communication system (300) further comprising at least one mobile communication system infrastructure entity (100) configured to communicate with the at least one mobile transceiver (200) via a user plane communication channel (320), the at least one mobile transceiver (200) being controlled via a control plane communication channel (310), the apparatus (40) comprising:
an input interface (42) configured to obtain a control plane address for the at least one mobile transceiver (200);
a control module (44) configured to determine a user plane address for the at least one mobile transceiver (200) based on a distinct transformation of the control plane address; and
an output interface (46) configured to provide the user plane address.

14. Apparatus (50) for determining a control plane address of at least one mobile transceiver (200) at a mobile communication system infrastructure entity (100) of a mobile communication system (300),
wherein the mobile communication system infrastructure entity (100) is configured to communicate with the at least one mobile transceiver (200) via a user plane communication channel (320), wherein the at least one mobile transceiver (200) is controlled via a control plane communication channel (310), the apparatus (50) comprising
an input interface (52) configured to obtain a user plane address of the at least one mobile transceiver (200); and
a control module (54) configured to determine the control plane address of the at least one mobile transceiver (200) based on a distinct transformation of the user plane address.

15. A computer program product comprising a computer readable medium having computer readable program code embodied therein, the computer readable program code being configured to implement any of the above methods, when being loaded on a computer, a processor, or a programmable hardware component.
